# EUROPÄISCHE PATENTSCHRIFT

(11) **EP 2 676 241 B1**
(45) Veröffentlichungstag und Bekanntmachung des Hinweises auf die Patenterteilung: **06.04.2016**
(21) Anmeldenummer: 12710157.4
(22) Anmeldetag: 17.02.2012
(51) Int. Cl.: G06T 7/20

(54) **VERFAHREN UND SYSTEM ZUR BESTIMMUNG EINER ANZAHL VON ÜBERGANGSOBJEKTEN**
METHOD AND SYSTEM FOR DETERMINING A NUMBER OF TRANSITIONAL OBJECTS
PROCÉDÉ ET SYSTÈME POUR DÉTERMINER LE NOMBRE D'OBJETS TRANSITOIRES

(30) Priorität: 18.02.2011 DE 102011011930
(43) Veröffentlichungstag der Anmeldung: 25.12.2013
(73) Patentinhaber: Hella KGaA Hueck & Co, 59552 Lippstadt (DE)
(72) Erfinder: STEFANOVIC, Marko, 13086 Berlin (DE)
(74) Vertreter: Pfenning, Meinig & Partner mbB
(86) Internationale Anmeldenummer: PCT/EP2012/052765
(87) Internationale Veröffentlichungsnummer: WO 2012/110632

(56) Entgegenhaltungen:
- JP-A- 2007 287 094
- JP-A- 2009 199 109
- SEPTIAN H ET AL: "People Counting by Video Segmentation and Tracking", CONTROL, AUTOMATION, ROBOTICS AND VISION, 2006. ICARCV '06. 9TH INTERN ATIONAL CONFERENCE ON, IEEE, PI, 1. Dezember 2006 (2006-12-01), Seiten 1-4, XP031103386, ISBN: 978-1-4244-0341-7

## Beschreibung

Die Erfindung betrifft ein Verfahren und ein System zur Bestimmung einer Anzahl von Übergangsobjekten, die sich aus einem ersten Teilbereich eines beobachteten Bereichs in einen zweiten Teilbereich des beobachteten Bereichs bewegen.

Dem Zählen von beweglichen Objekten kommt in vielen Bereichen der Technik und des täglichen Lebens große Bedeutung zu. Beispielsweise ist ein Betreiber eines Geschäfts daran interessiert zu erfahren, wie viele Besucher sein Geschäft innerhalb eines gegebenen Zeitraumes besuchen.

Bei aus dem Stand der Technik bekannten Zählverfahren für solche und ähnliche Anwendungen kommen als Zählvorrichtung Systeme zum Einsatz, die eine mit einer Bildauswerteeinheit verbundene Videokamera umfassen. Ein derartiges System ist eingerichtet, einen Bereich - z.B. den Eingangsbereich eines Geschäfts oder eines Verkehrsmittels - zu observieren, in dem Bereich sich bewegende Objekte zu erkennen und zu lokalisieren und ein Zählereignis auszulösen, wenn eines der Objekte eine in dem Bereich verlaufende vorgegebene Grenze-z.B. eine Türschwelle - , die in dem Bereich verläuft und diesen unterteilt, überquert.

Ein Verfahren und ein System mit den Merkmalen dee Oberbegriffe der unabhängigen Ansprüche werden in SEPTIAN H ET AL: "People Counting by Video Segmentation and Tracking", 9TH INTERNATIONAL CONFERENCE ON CONTROL, AUTOMATION, ROBOTICS AN VISION, ICARCV 2006, IEEE, PI, 1. Dezember 2006, Seiten 1-4, ISBN: 978-1-4244-0341-7 beschrieben. Verwandte Verfahren sind in den Druckschriften JP 2007 287094 A und JP 2009 199109 A gezeigt.

Diese bekannten Verfahren haben jedoch den Nachteil, dass Objekte, die sich innerhalb des observierten Bereichs hin und her bewegen und die Grenze dabei mehrfach überschreiten, bei jeder Überschreitung jeweils ein Zählereignis auslösen. Objekte, die ein solches Verhalten zeigen, werden auch Wiedereinsteiger genannt. Diese können ein Ergebnis der Zählung erheblich verfälschen.

Der vorliegenden Erfindung liegt somit die Aufgabe zugrunde, ein Verfahren und ein System zu entwickeln, mit deren Hilfe eine Zählung von beweglichen Objekten bei beliebigen Bewegungen der Objekte möglichst zuverlässig durchgeführt werden kann.

Diese Aufgabe wird erfindungsgemäß durch ein Verfahren gemäß Anspruch 1 und durch ein System gemäß Anspruch 9 gelöst. Vorteilhafte Weiterbildungen der Erfindung sind in den Unteransprüchen beschrieben.

Beschrieben wird ein Verfahren zur Bestimmung einer Anzahl von Übergangsobjekten, die sich aus einem ersten Teilbereich eines beobachteten Bereichs in einen zweiten Teilbereich des beobachteten Bereichs bewegen, wobei
- eine Folge von Bildern des beobachteten Bereichs aufgenommen wird, in denen jeweils Objekte identifiziert und Positionen der Objekte bestimmt werden,
- die Objekte abhängig von ihren Positionen jeweils entweder dem ersten oder dem zweiten Teilbereich zugeordnet werden und
- mehrfache Übergänge desselben Objekts zwischen dem ersten Teilbereich und dem zweiten Teilbereich bei der Bestimmung der Anzahl der Übergangsobjekte berücksichtigt werden.

Mit Hilfe dieses Verfahrens ist eine zuverlässige Bestimmung der Anzahl von Übergangsobjekten möglich. Dadurch, dass mehrfache Übergänge desselben Objekts zwischen dem ersten Teilbereich und dem zweiten Teilbereich bei der

Bestimmung der Anzahl der Übergangsobjekte berücksichtigt werden, können Fehler, wie sie bei Zählverfahren gemäß dem Stand der Technik auftreten, bei denen Wiedereinsteiger mehrfach gezählt werden, effektiv korrigiert werden.

Die Folge von Bildern des beobachteten Bereichs kann mit einer Sensoranordnung, die vorzugsweise einen optischen Sensor umfasst, aufgenommen werden. Der optische Sensor kann als einfache Fotokamera, als CCD-Kamera, als Stereokamera, als Videokamera, als Streak-Kamera oder als time-of-flight-Kamera ausgebildet sein. Die Aufnahme ist charakterisiert durch eine Belichtungszeit und durch eine Bildwiederholungsrate. Die Bildwiederholungsrate gibt dabei an, wie viele Bilder in einem gegebenen Zeitintervall aufgenommen werden. Im Falle der Aufnahme mit einer Sensoranordnung handelt es sich bei dem beobachteten Bereich um denjenigen Bereich, der von der Sensoranordnung jeweils observiert wird. Typischerweise ist der beobachtete Bereich dreidimensional und zusammenhängend. Der erste Teilbereich und der zweite Teilbereich des beobachteten Bereichs werden vorzugsweise derart gewählt, dass der beobachtete Bereich eine disjunkte Vereinigung des ersten Teilbereichs und des zweiten Teilbereichs ist. Dabei können auch der erste Teilbereich und der zweite Teilbereich jeweils zusammenhängend sein. Der erste Teilbereich und der zweite Teilbereich werden durch eine Grenze getrennt. In einem Beobachtungszeitraum, der durch die Aufnahme der Folge von Bildern gegeben ist, bewegen sich die Objekte in dem beobachteten Bereich. Eine Anzahl von in den Bildern jeweils identifizierten Objekten kann Veränderungen unterworfen sein. Es können also beständig Objekte den beobachteten Bereich verlassen und neu in diesen eintreten. Vorzugsweise werden die Belichtungszeit und die Bildwiederholungsrate den Geschwindigkeiten, mit denen sich die Objekte in dem beobachten Bereich bewegen, angepasst. Dazu kann die Belichtungszeit derart gewählt werden, dass eine erste Strecke, die ein Objekt innerhalb der Belichtungszeit zurücklegt, kleiner ist als ein erster Schwellwert. Ebenso kann die Bildwiederholungsrate derart gewählt werden, dass eine zweite Strecke, die ein Objekt zwischen der Aufnahme zweier aufeinanderfolgender Bilder zurücklegt, kleiner ist als ein zweiter Schwellwert.

Ein Übergang eines Objekts zwischen dem ersten Teilbereich und dem zweiten Teilbereich ist entweder ein Übergang des Objekts aus dem ersten Teilbereich in den zweiten Teilbereich oder ein Übergang des Objekts aus dem zweiten Teilbereich in den ersten Teilbereich. Zwischen der Aufnahme eines ersten Bildes und eines zweiten Bildes hat ein Übergang eines Objekts aus dem ersten Teilbereich in den zweiten Teilbereich stattgefunden, wenn das Objekt in dem ersten Bild dem ersten Teilbereich zugeordnet ist und wenn das Objekt in dem zweiten Bild dem zweiten Teilbereich zugeordnet ist. Ein Übergang eines Objekts aus dem zweiten Teilbereich in den ersten Teilbereich wird in analoger Weise definiert. Ein mehrfacher Übergang desselben Objekts liegt dann vor, wenn dieses Objekt sich in der Folge von Bildern mindestens einmal aus dem ersten Teilbereich in den zweiten Teilbereich und wieder zurück aus dem zweiten Teilbereich in den ersten Teilbereich bewegt. Ein mehrfacher Übergang desselben Objekts liegt auch dann vor, wenn dieses Objekt sich in der Folge von Bildern mindestens einmal aus dem zweiten Teilbereich in den ersten Teilbereich und wieder zurück aus dem ersten Teilbereich in den zweiten Teilbereich bewegt. Ein mehrfacher Übergang desselben Objekts liegt also dann vor, wenn dieses Objekt mindestens zweimal die Grenze zwischen dem ersten und dem zweiten Teilbereich passiert. Das Berücksichtigen der Anzahl der Übergangsobjekte umfasst mindestens ein Überprüfen der Anzahl. Dieses kann, muss aber keine Veränderung der Anzahl nach sich ziehen.

Übergangsobjekte im Sinne der vorliegenden Erfindung sind zum ersten solche Objekte, die in einem ersten der Folge von Bildern dem ersten Teilbereich zugeordnet werden und die am Ende der Folge von Bildern oder unmittelbar, bevor sie den beobachteten Bereich jeweils verlassen, dem zweiten Teilbereich zugeordnet werden. Übergangsobjekte im Sinne der vorliegenden Erfindung sind zusätzlich auch solche Objekte, die in der Folge von Bildern von außerhalb des beobachteten Bereichs in den beobachteten Bereich eintreten und in dem beobachteten Bereich zuerst dem ersten Teilbereich zugeordnet werden und die am Ende der Folge von Bildern oder unmittelbar, bevor sie den beobachteten Bereich jeweils verlassen, dem zweiten Teilbereich zugeordnet werden. Alle anderen Objekte sind nicht Übergangsobjekte im Sinne der vorliegenden Erfindung. Mit anderen Worten wird mit dem vorliegend beschriebenen Verfahren und System ein Zählen in nur einer Richtung verwirklicht - von dem ersten in den zweiten Teilbereich. Ein Zählen in einer entgegengesetzten Richtung-von dem zweiten in den ersten Teilbereich - kann in einfacher Weise ganz analog dem hier Beschriebenen Zählen durchgeführt werden, indem der erste und der zweite Teilbereich vertauscht werden. Ebenso können das hier beschriebene System und Verfahren auch zum gleichzeitigen Zählen in beiden Richtungen verwendet werden.

Bei einer vorteilhaften Ausgestaltung der Erfindung umfasst das Identifizieren der Objekte in den Bildern jeweils eine Segmentierung der Bilder. Die Segmentierung umfasst ein Zusammenfassen einzelner Bildpixel der Bilder zu Segmenten. Das Segmentieren kann auf der Grundlage von Grauwerten der Bildpixel vorgenommen werden. Vorzugsweise entspricht ein Segment jeweils einem identifizierten Objekt. Die Position eines identifizierten Objekts kann beispielsweise als Mittelpunkt eines Segments gewählt werden. Bei der Segmentierung kann ein Bildhintergrund berücksichtigt werden.

Bei einer weiteren vorteilhaften Ausgestaltung der Erfindung wird jedem der Objekte jeweils eine Spur bzw. ein "Track" zugeordnet, die aus Positionen des Objekts in der Folge von Bildern bestimmt wird, wobei die Spur jeweils eine Anfangsposition hat, die entweder im ersten oder im zweiten Teilbereich liegt. Die Spur umfasst also Positionen desselben Objekts in aufeinanderfolgenden Bildern. Eine Spur kann auch nur eine einzige aktuelle Position des Objekts umfassen. Zwei in aufeinanderfolgenden Bildern bestimmte Positionen werden vorzugsweise dann derselben Spur zugeordnet, wenn sie benachbart sind. Dies bedeutet, dass ein Abstand zwischen den beiden Positionen kleiner ist als ein Höchstabstand. Bei der Zuordnung kann aber jeweils auch eine Vielzahl von mehr als zwei aufeinander folgenden Positionen berücksichtigt werden. Auf diese Weise kann die Bewegung eines Objekts in der Folge von Bildern zuverlässig verfolgt werden.

Die Spur eines Objekts endet dann, wenn das Objekt den beobachteten Bereich verlässt. Die Anfangsposition kann die Position eines Objekts sein, das nach einem Eintritt in den beobachteten Bereich erstmalig identifiziert wird. Die Anfangsposition kann auch die Position eines in einem ersten Bild identifizierten Objekts sein. Die Anfangsposition kann auch die Position eines Objekts sein, dass den beobachteten Bereich zwischenzeitlich verlassen hat und anschließend wieder in den beobachteten Bereich eingetreten ist. Wenn das Objekt den beobachteten Bereich verlässt, kann die Spur entweder gelöscht werden oder gespeichert bleiben. Dadurch, dass jedem der Objekte jeweils eine Spur zugeordnet wird, ist es möglich, die Bewegung der Objekte in der Folge von Bildern zu verfolgen.

Bei einer weiteren vorteilhaften Ausgestaltung der Erfindung wird jedem der Objekte anhand seiner Spur ein Gedächtniszustand zugeordnet, der bei gegebener Anfangsposition der Spur abhängig davon ist, ob das jeweilige Objekt dem ersten oder dem zweiten Teilbereich zugeordnet wird. Vorzugsweise wird der Gedächtniszustand mit einem vorgegebenen Wert initialisiert, wenn das jeweilige Objekt erstmalig identifiziert wird. Der Gedächtniszustand eines Objekts umfasst zusätzliche Informationen über dessen Bewegung in dem beobachteten Bereich. Vorzugsweise bleibt der Gedächtniszustand eines Objekts gespeichert, wenn dieses Objekt den beobachteten Bereich verlässt.

Bei einer weiteren vorteilhaften Ausgestaltung der Erfindung umfasst die Bestimmung der Anzahl der Übergangsobjekte eine Aktualisierung der Anzahl nach einem Übergang eines der Objekte zwischen dem ersten und dem zweiten Teilbereich, wobei die Aktualisierung abhängig von dem Gedächtniszustand des jeweiligen Objekts und von einer Richtung des Übergangs des jeweiligen Objekts vorgenommen wird. Dabei kann die Aktualisierung umfassen, dass die Anzahl der Übergangsobjekte inkrementiert wird, dass die Anzahl der Übergangsobjekte dekrementiert wird, oder dass die Anzahl der Übergangsobjekte nicht verändert wird. Vorzugsweise wird die Anzahl der Übergangsobjekte bei einem Beginn der Aufnahme der Folge von Bildern mit einem Anfangswert initialisiert. Die Richtung des Übergangs des jeweiligen Objekts bezeichnet dabei, ob das jeweilige Objekt aus dem ersten Teilbereich in den zweiten Teilbereich übergangen ist oder ob das jeweilige Objekt aus dem zweiten Teilbereich in den ersten Teilbereich übergegangen ist. Die Ermittlung des aktuellen Gedächtniszustands ist vorzugsweise stets vor der Aktualisierung der Anzahl der Übergangsobjekte vorzunehmen. Die Aktualisierung der Anzahl der Übergangsobjekte erfolgt also jeweils, nachdem eines oder mehrere der Objekte die Grenze zwischen dem ersten Teilbereich und dem zweiten Teilbereich passiert hat. Das Durchführen der Aktualisierung in Abhängigkeit von dem Gedächtniszustand und von der Richtung des Übergangs des jeweiligen Objekts gestattet es, das Vorliegen eines mehrfachen Übergangs desselben Objekts zu erkennen.

Bei einer weiteren vorteilhaften Ausgestaltung der Erfindung ist der Gedächtniszustand ein erster Gedächtniszustand, wenn die Anfangsposition der Spur des jeweiligen Objekts und die aktuelle Position des jeweiligen Objekts jeweils in unterschiedlichen Teilbereichen liegen, und der Gedächtniszustand ist ein zweiter Gedächtniszustand, wenn die Anfangsposition des jeweiligen Objekts und die aktuelle Position des jeweiligen Objekts in demselben Teilbereich liegen. Der Gedächtniszustand eines Objekts ändert sich demnach, wenn das Objekt die Grenze zwischen dem ersten Teilbereich und dem zweiten Teilbereich passiert. Der Gedächtniszustand eines Objekts ändert sich jeweils nicht, solange das Objekt sich in demselben Teilbereich aufhält.

Bei einer weiteren vorteilhaften Ausgestaltung der Erfindung ist der Gedächtniszustand eine Zahl, die bei einem Übergang des jeweiligen Objekts zwischen dem ersten und dem zweiten Teilbereich jeweils um einen ersten Wert inkrementiert wird, wobei der erste Gedächtniszustand vorliegt, wenn die Zahl ein ungeradzahliges Vielfaches des ersten Wertes ist, und wobei der zweite Gedächtniszustand vorliegt, wenn die Zahl ein geradzahliges Vielfaches des ersten Wertes ist. Damit kann aus dem Gedächtniszustand eines Objekts ermittelt werden, wie oft das jeweilige Objekt die Grenze zwischen dem ersten und dem zweiten Teilbereich überquert hat. Es ist vorteilhaft, wenn die Zahl bei einer ersten Identifizierung des jeweiligen Objekts mit einem Anfangswert initialisiert wird. Es ist zweckmäßig, als Anfangswert 0 zu wählen. Wird in diesem Fall der erste Wert gleich 1 gesetzt, so gibt der Gedächtniszustand des jeweiligen Objekts unmittelbar an, wie oft das jeweilige Objekt die Grenze zwischen dem ersten und dem zweiten Teilbereich überschritten hat.

Bei einer weiteren vorteilhaften Ausgestaltung der Erfindung wird das Aktualisieren der Anzahl der Übergangsobjekte derart vorgenommen, dass die Anzahl der Übergangsobjekte um einen zweiten Wert inkrementiert wird, wenn der Übergang des jeweiligen Objekts vom ersten in den zweiten Teilbereich erfolgt und der Gedächtniszustand des jeweiligen Objekts der erste Gedächtniszustand ist, und dass die Anzahl der Übergangsobjekte um den zweiten Wert dekrementiert wird, wenn der Übergang des jeweiligen Objekts vom zweiten in den ersten Teilbereich erfolgt und der Gedächtniszustand des jeweiligen Objekts der zweite Gedächtniszustand ist. Auch in diesem Fall ist vorteilhafterweise zunächst die Ermittlung des Gedächtniszustands des jeweiligen Objekts und erst danach das Aktualisieren der Anzahl der Übergangsobjekte vorzunehmen.

Besonders vorteilhaft ist es, wenn jedem identifizierten Objekt jeweils eine Inkrement-Variable und eine Dekrement-Variable zugeordnet und gespeichert wird. Die Inkrement-Variable wird jeweils um den zweiten Wert inkrementiert, wenn die Anzahl der Übergangsobjekte nach einem Übergang des jeweiligen Objekts um den zweiten Wert inkrementiert wird. Analog wird die Dekrement-Variable um den zweiten Wert dekrementiert, wenn die Anzahl der Übergangsobjekte nach einem Übergang des jeweiligen Objekts um den zweiten Wert dekrementiert wird. Vorzugsweise bleiben die Werte der Inkrement-Variable und der Dekrement-Variable des jeweiligen Objekts auch dann gespeichert, wenn das Objekt den beobachteten Bereich verlässt. Auf diese Weise kann eine Anzahl von Wiedereinsteigern dokumentiert und nachvollzogen werden. Dies kann praktisch z.B. von Bedeutung sein, wenn es sich bei dem beobachteten Bereich um einen Ein- und Ausstiegsbereich aufeinander folgender Rolltreppen handelt, wie sie typischerweise in Kaufhäusern zu finden sind. Der erste Bereich kann in diesem Fall ein Rolltreppenhaus, umfassend eine erste Rolltreppe zwischen einer ersten und einer zweiten Etage und eine zweite Rolltreppe zwischen der zweiten und einer dritten Etage, der zweite Bereich ein Teil der zweiten Etage des Kaufhauses sein. Eine Person, die, auf der ersten Rolltreppe - d.h. aus dem ersten Teilbereich - kommend, kurzzeitig die zweite Etage - d.h. den zweiten Teilbereich - betritt, und sich sodann auf die zweite Rolltreppe begibt und damit in den ersten Teilbereich wiedereinsteigt, trägt insgesamt nicht zu einer Veränderung der Anzahl der Übergangsobjekte -in dem Beispiel sind dies Besucher der zweiten Etage - bei. In Gestalt der Inkrement- und der Dekrement-Variable bleibt ihr Kurzbesuch in der zweiten Etage aber dokumentiert.

Bei einer weiteren speziellen Ausführungsform wird ein Objekt, vorzugsweise jedes Objekt, das mindestens einmal aus dem ersten Teilbereich in den zweiten Teilbereich übergeht oder übergegangen ist oder das mindestens einmal aus dem zweiten Teilbereich in den ersten Teilbereich übergeht oder übergegangen ist, als Einsteiger und/oder als Aussteiger markiert, wobei das Objekt
- als Einsteiger markiert wird, wenn seine Anfangsposition im ersten Teilbereich liegt,
- als Aussteiger markiert wird, wenn seine Anfangsposition im zweiten Teilbereich liegt sowie
- zugleich als Einsteiger und als Aussteiger markiert wird, wenn der Gedächtniszustand des Objekts der zweite Gedächtniszustand ist.

Das Markieren kann ein Zuordnen eines Einsteigerattributs und/oder eines Aussteigerattributs umfassen. Es können jedem identifizierten Objekt z. B. eine Einsteigervariable und/oder eine Aussteigervariable zugeordnet werden, die jeweils genau zwei unterschiedliche Werte annehmen kann, einen Anfangswert und einen Endwert. Dabei kann der Anfangswert jeweils Null und der Endwert jeweils Eins sein. Es sind aber auch nicht-numerische Werte denkbar. Die Einsteigervariable und die Aussteigervariable werden vorzugsweise jeweils mit dem Anfangswert initialisiert, wenn das Objekt zum ersten Mal identifiziert wird. Ist die Einsteigervariable auf den Anfangswert gesetzt, so ist das entsprechende Objekt nicht als Einsteiger markiert. Ebenso ist das Objekt nicht als Aussteiger markiert, wenn die Aussteigervariable des Objekts auf den Anfangswert gesetzt ist. Durch Setzten der Einsteigervariable auf den Endwert kann das entsprechende Objekt als Einsteiger markiert werden. In gleicher Weise kann das Objekt durch Setzen der Aussteigervariable auf den Endwert als Aussteiger markiert werden. Vorzugsweise bleiben die Werte der Einsteigervariable und der Aussteigervariable gespeichert, wenn das Objekt den beobachteten Bereich verlässt. Es sind auch andere Realisierungen des Markierens denkbar. Entscheidend ist, dass das Markieren derart vorgenommen wird oder realisiert ist, dass für ein identifiziertes Objekt, vorzugsweise für jedes identifizierte Objekt, zu jedem Zeitpunkt feststellbar ist, ob es als Einsteiger markiert ist oder nicht und/oder ob es als Aussteiger markiert ist oder nicht. Vorzugsweise wird das Markieren eines Objekts unmittelbar nach jedem Übergang des Objekts zwischen den Teilbereichen überprüft und gegebenenfalls aktualisiert.

Durch Zählen der solcherart als Einsteiger und/oder als Aussteiger markierten Objekte können vorzugsweise zu jedem Zeitpunkt eine Einsteigerzahl und/oder eine Aussteigerzahl bestimmt werden, wobei die Einsteigerzahl dann gleich der Anzahl der als Einsteiger markierten Objekte ist und/oder wobei die Aussteigerzahl dann gleich der Anzahl der als Aussteiger markierten Objekte ist. So können weitere Informationen über die Objekte gewonnen werden, die bei den bisher beschriebenen Ausführungsformen unberücksichtigt bleiben. Das Bestimmen der Einsteigerzahl und/oder der Aussteigerzahl kann beispielsweise beim Zählen von Kunden in einem Kaufhaus zur Anwendung kommen, bei dem sich ein Verkaufsstand im Türbereich befindet, wobei die Türschwelle die Grenze zwischen dem ersten und dem zweiten Teilbereich sein soll und wobei der Verkaufsstand im zweiten Teilbereich liegen soll. Es ist in diesem Fall denkbar, dass ein Kunde die Türschwelle von außen kommend überschreitet, sich also vom ersten Teilbereich über die Grenze in den zweiten Teilbereich bewegt, sich am Verkaufsstand beraten lässt und sich daraufhin wieder in den ersten Teilbereich bewegt und das Kaufhaus verlässt. Dieser Kunde wird als Wiedereinsteiger identifiziert und folglich nicht als Übergangsobjekt gezählt. Beim Zählen der als Einsteiger und/oder als Aussteiger markierten Objekte wird dieser Kunde jedoch berücksichtigt.

Ein System zur Bestimmung einer Anzahl von Übergangsobjekten, die sich aus einem ersten Teilbereich eines beobachteten Bereichs in einen zweiten Teilbereich des beobachteten Bereichs bewegen, umfasst mindestens eine Sensoranordnung und eine mit der Sensoranordnung verbundene Recheneinheit, wobei die Sensoranordnung eingerichtet ist, eine Folge von Bildern des beobachteten Bereichs aufzunehmen, und wobei die Recheneinheit programmtechnisch eingerichtet ist,
- in den Bildern jeweils Objekte zu identifizieren und Positionen der Objekte zu bestimmen,
- die Objekte abhängig von ihren Positionen jeweils entweder dem ersten oder dem zweiten Teilbereich zuzuordnen und
- mehrfache Übergänge desselben Objekts zwischen dem ersten Teilbereich und dem zweiten Teilbereich bei der Bestimmung der Anzahl der Übergangsobjekte zu berücksichtigen.

Ausführungsbeispiele der Erfindung sind in den nachfolgenden Zeichnungen dargestellt und werden in der folgenden Beschreibung näher erläutert. Es zeigten
- Fig. 1: schematisch einen von einer Sensoranordnung observierten Eingangsbereich eines Gebäudes, in dem sich Personen bewegen,
- Fig. 2: schematisch eine erste Aufnahme des Eingangsbereis aus Fig. 1, wobei die Aufnahme bereits einer Segmentierung unterworfen wurde,
- Fig. 3: die erste Aufnahme, wobei nach der Segmentierung Positionen einiger Personen aus Fig. 1 bestimmt wurden,
- Fig. 4: schematisch eine zweite Aufnahme des Eingangsbereichs mit Positionen und Spuren von identifizierten Personen,
- Fig. 5: schematisch eine vierte Aufnahme des Eingangsbereichs, ebenfalls mit Positionen und Spuren von identifizierten Personen und
- Fig. 6: schematisch eine Spur einer Person im Eingangsbereich über eine Folge von fünf Aufnahmen, wobei die Person jeweils als Einsteiger und/oder als Aussteiger markiert wird.

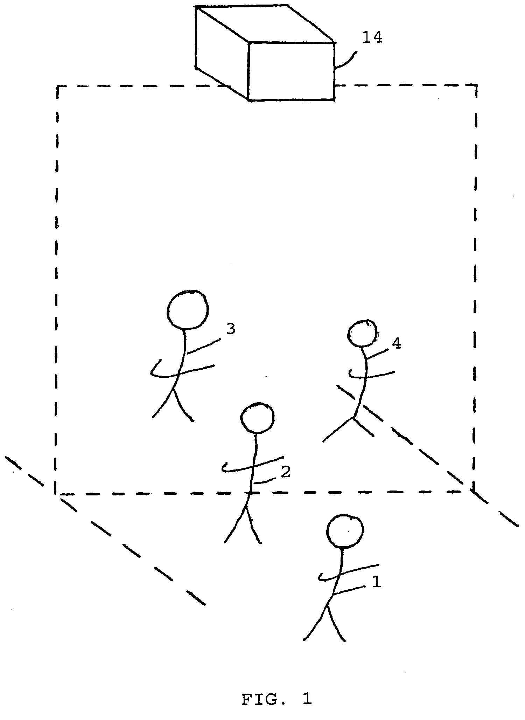

Fig. 1 zeigt schematisch eine Ansicht eines Eingangsbereichs eines Gebäudes, bei dem es sich beispielsweise um ein Kaufhaus handelt. Zu erkennen ist eine Sensoranordnung 14, die eingerichtet ist, den Eingangsbereich zu beobachten. In dem vorliegenden Ausführungsbeispiel ist die Sensoranordnung 14 als einzelne Videokamera ausgebildet. Ebenso können als Sensoranordnung 14 eine Fotokamera, eine Stereokamera eine Streak-Kamera oder eine time-of-flight-Kamera verwendet werden. Die Sensoranordnung 14 kann auch eine Kombination mehrerer jeweils gleichartiger oder verschiedenartiger Sensoren umfassen. Vorzugsweise handelt es sich dabei um optische Sensoren. Nicht zu erkennen ist eine Recheneinheit, die in der Sensoranordnung 14 angeordnet ist und die mit der Sensoranordnung 14 verbunden ist. In dem Eingangsbereich bewegen sich Personen, die Objekte 1, 2, 3 und 4 sind. Die Sensoranordnung 14 ist eingerichtet, eine Folge von Bildern des Eingangsbereichs aufzunehmen. Die Objekte 1, 2, 3 und 4 bewegen sich in dem Eingangsbereich typischerweise mit einer Geschwindigkeit von etwa 1 m/s. Eine Belichtungszeit und eine Bildaufnahmerate der Sensoranordnung 14 sind dieser Geschwindigkeit angepasst. So beträgt die Bildaufnahmerate der Sensoranordnung 14 etwa 20 Hz und die Belichtungszeit eines einzelnen Bildes der Folge von Bildern beträgt 40 ms.

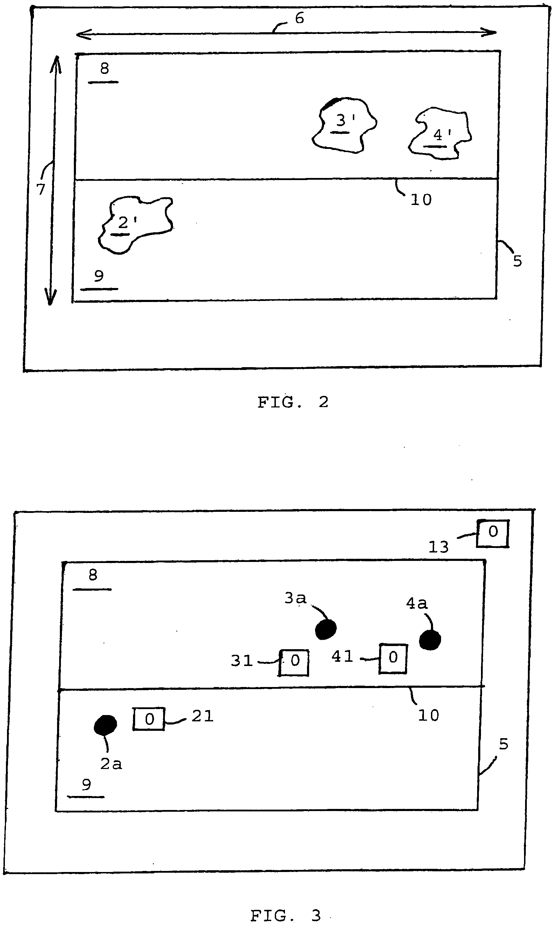

Fig. 2 zeigt ein erstes der Folge von Bildern, die einen beobachteten Bereich 5 darstellt. Der beobachtete Bereich 5 hat eine rechteckige Form mit einer Länge 6 von etwa 5 m und einer Breite 7 von etwa 3 m. Der beobachtete Bereich wird von einer Grenze 10 durchlaufen, die ihn in einen ersten Teilbereich 8 und einen zweiten Teilbereich 9 unterteilt. Die Grenze 10 gibt z.B. den Verlauf einer Türschwelle im Eingangsbereich wieder. In dem in Fig. 2 gezeigten ersten Bild, das auch eine erste Aufnahme heißen soll, wurde bereits eine Segmentierung des von der Sensoranordnung 14 aufgenommenen Bildes durchgeführt. Dargestellt sind aus der Segmentierung erhaltene Segmente 2', 3' und 4'. Die Segmente 2', 3' und 4' entsprechen jeweils den Objekten 2, 3 und 4, die in Fig. 1 gezeigt sind. Mittels dieser Segmentierung wurden die Objekte 2, 3 und 4 in dem beobachteten Bereich 5 jeweils identifiziert. Das in Fig. 1 gezeigte Objekt 1 soll sich außerhalb des beobachteten Bereichs 5 befinden und wurde daher in Fig. 2 nicht identifiziert. In den nachfolgenden Abbildungen sind wiederkehrende Merkmale jeweils mit denselben Bezugszeichen versehen.

Fig. 3 zeigt wiederum die bereits in Fig. 2 dargestellte erste Aufnahme der Folge von Bildern, wobei die Recheneinheit aus den Segmenten 2', 3' und 4', mit Hilfe derer die Objekte 2, 3 und 4 identifiziert wurden, Positionen 2a, 3a und 4a der Objekte 2, 3 und 4 bestimmt hat. Eine Identifikation von Objekten mittels Segmentierung und eine anschließende Bestimmung von Positionen der jeweiligen Objekte aus den Segmenten erfolgt in jedem der Folge von Bildern in analoger Weise und wird jeweils von der Recheneinheit durchgeführt. In den Fign. 3 bis 5 werden jeweils nur Positionen von Objekten gezeigt. Diese sollen jeweils stellvertretend für die Objekte stehen, die den Positionen jeweils zugeordnet sind.

Die Recheneinheit ist eingerichtet, die Objekte 2, 3 und 4 jeweils abhängig von ihren jeweiligen Positionen 2a, 3a und 4a entweder dem ersten Teilbereich 8 oder dem zweiten Teilbereich 9 zuzuordnen. So sind in Fig. 3 die Objekte 3a und 4a dem ersten Teilbereich 8 zugeordnet. Das Objekt 2a ist dem zweiten Teilbereich 9 zugeordnet. Im Folgenden soll eine Bestimmung einer Anzahl von Übergangsobjekten beschrieben werden, die sich aus dem ersten Teilbereich 8 des beobachteten Bereichs 5 in den zweiten Teilbereich 9 des beobachteten Bereichs 5 bewegen.

In Fig. 3 wird jedem der den Positionen 2a, 3a und 4a zugeordneten Objekte jeweils eine Spur zugeordnet, die aus Positionen des jeweiligen Objekts in der Folge von Bildern bestimmt wird. In dem in Fig. 3 dargestellten ersten Bild sind die Spuren der Objekte 2, 3 und 4 jeweils mit den Positionen 2a, 3a und 4a identisch. In dem in Fig. 3 gezeigten ersten Bild umfasst jede der Spuren also nur jeweils eine Position. Dabei ist jede der Positionen 2a, 3a und 4a in Fig. 3 zugleich eine Anfangsposition der jeweiligen Spur.

In Fig. 3 wird dem Objekt 2 mit der Position 2a zusätzlich eine Zahl 21 zugeordnet, die mit 0 initialisiert wird. Entsprechend werden den Objekten 3 und 4 mit den Positionen 3a und 4a jeweils Zahlen 31 und 41 zugeordnet, die jeweils ebenfalls mit 0 initialisiert werden. Ein Wert der Zahl 21 soll angeben, wie oft das entsprechende Objekt 2 die Grenze 10 zwischen dem ersten Teilbereich 8 und dem zweiten Teilbereich 9 passiert hat. Eine analoge Bedeutung haben die Zahlen 31 und 41 in Bezug auf die Objekte 3 und 4. Die Zahlen 21, 31 und 41 stellen jeweils einen Gedächtniszustand der Objekte 2, 3 und 4 dar. Eine Anzahl 13 der Übergangsobjekte wird in der in Fig. 3 dargestellten ersten Aufnahme der Folge von Bildern mit 0 initialisiert. Dies bedeutet, dass in der ersten Aufnahme noch keines der identifizierten Objekte 2, 3 und 4 als Übergangsobjekt erkannt wurde.

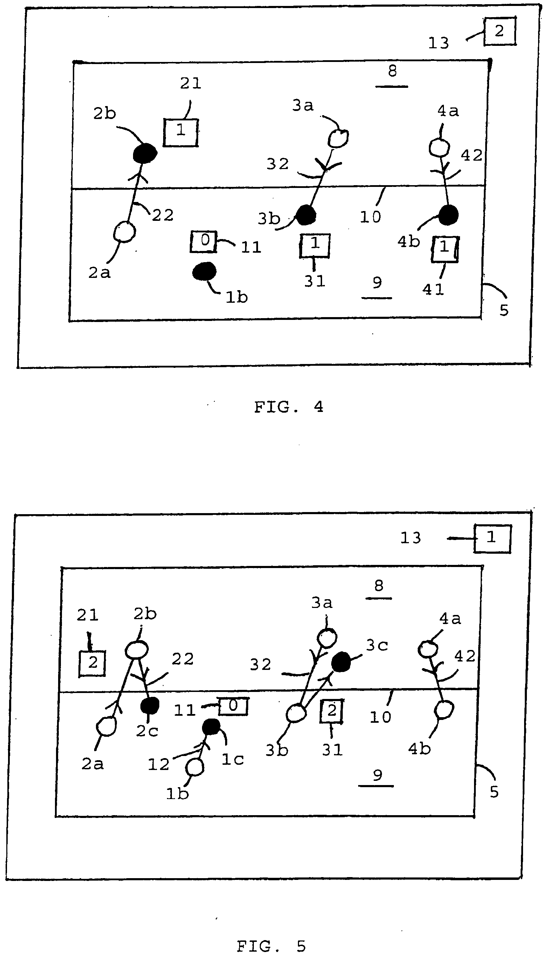

Fig. 4 zeigt ein zweites Bild der Folge von Bildern, das auch eine zweite Aufnahme genannt werden soll und das zeitlich nach dem in Fig. 3 gezeigten ersten Bild aufgenommen worden ist. In der zweiten Aufnahme wurden bereits eine Segmentierung und eine Bestimmung von aktuellen Positionen 1b, 2b, 3b und 4b der Objekte 1, 2, 3 und 4 durchgeführt, wobei die aktuellen Positionen jeweils als schwarze Punkte dargestellt sind. Zwischen der in Fig. 3 gezeigten ersten Aufnahme und der in Fig. 4 gezeigten zweiten Aufnahme hat sich das Objekt 2 von der Position 2a, die im zweiten Teilbereich 9 liegt, hin zu der aktuellen Position 2b, die im ersten Teilbereich 8 liegt, bewegt. Dem Objekt 2 mit der Position 2b ist in Fig. 4 eine Spur 22 zugeordnet, die als Anfangsposition die Position 2a des Objekts 2 und die die aktuelle Position 2b des Objekts 2 umfasst.

Das Objekt 2 hat zwischen der ersten und der zweiten Aufnahme einen Übergang aus dem zweiten Teilbereich 9 in den ersten Teilbereich 8 vollzogen. Nach diesem Übergang des Objekts 2 wird die dem Objekt 2 zugeordnete Zahl 21, die den Gedächtniszustand des Objekts 2 darstellt, um einen ersten Wert inkrementiert. Der erste Wert ist hier gleich 1 gewählt. In Fig. 4 ist der Wert der dem Objekt 2 zugeordneten Zahl 21 damit 1. Somit ist der Gedächtniszustand des Objekts 2 in Fig. 4 ein erster Gedächtniszustand, der dadurch charakterisiert ist, dass die Zahl 21 ein ungerad-zahliges Vielfaches des ersten Wertes 1 ist. Mit anderen Worten gilt für die Zahl 21 im ersten Gedächtniszustand p mod 2 = 1, wobei "p" den Wert der Zahl im ersten Gedächtniszustand annehmen soll und wobei "mod" der Modulo-Operator ist. Ebenso ist der erste Gedächtniszustand des Objekts 2 in Fig. 4 dadurch charakterisiert, dass die aktuelle Position 2b des Objekts 2 und die Anfangsposition 2a der Spur 22 des Objekts 2 jeweils in unterschiedlichen Teilbereichen liegen. Mit anderen Worten liegt der erste Gedächtniszustand dann vor, wenn das jeweilige Objekt die Grenze 10 eine ungerade Anzahl von Malen überschritten hat.

Nachdem das Objekt 2 die Grenze 10 überschritten hat und die ihm zugeordnete Zahl 21 um 1 inkrementiert wurde, wird eine Aktualisierung der Anzahl 13 von Übergangsobjekten vorgenommen, und zwar abhängig von dem Gedächtniszustand des Objekts 2 und von einer Richtung, in der das Objekt 2 die Grenze 10 überschritten hat. Im Falle des Objekts 2, das in Fig. 4 im ersten Gedächtniszustand ist und die Grenze 10 in der Richtung von dem zweiten in den ersten Teilbereich überschritten hat, beinhaltet die Aktualisierung, dass die Anzahl 13 nicht verändert wird.

Das Objekt 1, dem in Fig. 4 die aktuelle Position 1b zugeordnet ist, wurde in Fig. 4 erstmalig identifiziert. Auch ihm kann eine Spur zugeordnet werden, die jedoch lediglich die aktuelle Position 1b selbst umfasst. Zusätzlich wird dem Objekt 1 eine Zahl 12 zugeordnet, die mit 0 initialisiert wird und ein Gedächtniszustand des Objekts 1 ist.

Dem Objekt 3 ist in Fig. 4 die aktuelle Position 3b zugeordnet. Dem Objekt 3 ist zudem eine Spur 32 zugeordnet, die die aktuelle Position 3b und eine Anfangsposition 3a umfasst, wobei letztere mit der in der ersten Aufnahme bestimmten Position 3a des Objekts 3 identisch ist. Die dem Objekt 3 zugeordnete Zahl 31 wird um 1 inkrementiert, nachdem das Objekt 3 die Grenze 10 überschritten hat, und hat in Fig. 4 somit den Wert 1.

Der Übergang des Objekts 3 ist in Fig. 4 aus dem ersten Teilbereich 8 in den zweiten Teilbereich 9 erfolgt. Die dem Objekt 3 zugeordnete Zahl 31 hat in Fig. 4 den Wert 1 und stellt damit einen ersten Gedächtniszustand des Objekts 3 dar. Daher wird die Anzahl 13 der Übergangsobjekte infolge dieses Übergangs des Objekts 3 zwischen der ersten und der zweiten Aufnahme um 1 inkrementiert, wobei 1 ein zweiter Wert ist. In Fig. 4 ist eine Situation des Objekts 4, dem ebenfalls eine Spur 41 zugeordnet ist, analog der Situation des Objekts 3. Daher wird auch infolge des Übergangs des Objekts 4 aus dem ersten Teilbereich 8 in den zweiten Teilbereich 9 die Anzahl 13 der Übergangsobjekte um 1 inkrementiert. Nachdem die Anzahl 13 der Übergangsobjekte für die in Fig. 4 identifizierten Objekte 2, 3 und 4, die zwischen der ersten und der zweiten Aufnahme jeweils die Grenze 10 überquert haben, jeweils aktualisiert worden ist, hat die Anzahl 13 der Übergangsobjekte in Fig. 4 den Wert 2. Dies ist gleichbedeutend damit, dass im Verlauf der ersten und der zweiten Aufnahme zwei Objekte, nämlich das Objekt 3 und das Objekt 4, die jeweils zuerst im ersten Teilbereich 8 identifiziert wurden, von dem ersten Teilbereich 8 in den zweiten Teilbereich 9 übergewechselt sind.

Fig. 5 zeigt eine dritte Aufnahme der Folge von Bildern. Die Objekte 1, 2 und 3 wurden mittels Segmentierung identifiziert und deren Positionen 1c, 2c und 3c jeweils bestimmt. Das Objekt 2 hat sich zwischen der zweiten und der dritten Aufnahme aus der Position 2b im ersten Teilbereich 8 in die Position 2c in den zweiten Teilbereich 9 bewegt. Die dem Objekt 2 zugeordnete Spur 22 umfasst damit die aktuelle Position 2c des Objekts 2 sowie die in der zweiten Aufnahme bestimmte Position 2b und die in der ersten Aufnahme bestimmte Position 2a, die eine Anfangsposition der Spur 22 ist. Das Objekt 2 hat also wiederum die Grenze 10 überquert. Daher wird die dem Objekt 2 zugeordnete Zahl 21 erneut um 1 inkrementiert und hat in Fig. 5 nun den Wert 2. Die Zahl 21 stellt damit einen zweiten Gedächtniszustand des Objekts 2 dar. Dieser ist zum einen dadurch charakterisiert, dass die aktuelle Position 2c des Objekts 2 und die Anfangsposition 2a der Spur 22 des Objekts 2 demselben Teilbereich, nämlich hier dem zweiten Teilbereich 9 zugeordnet sind. Zum anderen ist der zweite Gedächtniszustand des Objekts 2 dadurch definiert, dass die Zahl 21 einen Wert hat, der ein geradzahliges Vielfaches des ersten Wertes ist. (Der erste Wert hat den Wert 1 und die Zahl 21 in Fig. 5 hat den Wert 2.) Mit anderen Worten gilt für die Zahl 21 im zweiten Gedächtniszustand q mod 2 = 0, wobei "q" den Wert der Zahl im zweiten Gedächtniszustand annehmen soll und wobei "mod" wie zuvor der Modulo-Operator ist.

Nach dem Übergang des Objekts 2 wird eine Aktualisierung der Anzahl 13 der Übergangsobjekte vorgenommen. Im Falle des Objekts 2 in Fig. 5 umfasst die Aktualisierung jedoch keine Änderung der Anzahl 13. Die aktuelle Position 2c und die Anfangsposition 2a der Spur 22 des Objekts 2 liegen jeweils in dem zweiten Teilbereich 9. Damit ist das Objekt 2 in Fig. 5 ein Wiedereinsteiger und trägt nicht zur Anzahl 13 der Übergangsobjekte bei. Es liegt also ein mehrfacher Übergang desselben Objekts, nämlich des Objekts 2, zwischen dem ersten Teilbereich 8 und dem zweiten Teilbereich 9 vor.

Das Objekt 1 hat sich zwischen der zweiten Aufnahme und der dritten Aufnahme aus der Position 1b in die aktuelle Position 1c bewegt. Eine dem Objekt 1 zugeordnete Spur 12 umfasst damit die Positionen 1c und die Position 1b, wobei die Position 1b eine Anfangsposition der Spur 12 des Objekts 1 ist. Das Objekt 1 hat die Grenze 10 zwischen dem ersten Teilbereich 8 und dem zweiten Teilbereich 9 zwischen der zweiten und der dritten Aufnahme nicht überschritten. Daher wird die dem Objekt 1 zugeordnete Zahl 11 nicht inkrementiert und hat weiterhin den Wert 0. Für das Objekt 1 wird in Fig. 5 keine Aktualisierung der Anzahl 13 durchgeführt.

Das Objekt 3 hat sich zwischen der zweiten und der dritten Aufnahme wiederum aus der im zweiten Teilbereich 9 gelegenen Position 3b in die aktuelle Position 3c bewegt, die im ersten Teilbereich 8 liegt. Das Objekt 3 ist damit aus dem zweiten Teilbereich 9 in den ersten Teilbereich 8 übergegangen. Infolge dieses Übergangs des Objekts 3 wurde die dem Objekt 3 zugeordnete Zahl 31 wiederum um 1 inkrementiert und hat nun den Wert 2. Damit ist der Gedächtniszustand des Objekts 3 in Fig. 5 ein zweiter Gedächtniszustand. Infolge dieses Übergangs des Objekts 3 aus dem zweiten in den ersten Teilbereich wird die Anzahl 13 der Übergangsobjekte daher um 1 dekrementiert und hat nun den Wert 1. Dabei ist 1 wieder der zweite Wert.

Das Objekt 4 hat in Fig. 5 den beobachteten Bereich 5 verlassen und wird nicht identifiziert. Daher trägt das Objekt 4 in Fig. 5 nicht zu der Aktualisierung der Anzahl 13 der Übergangsobjekte bei. Nachdem die Aktualisierung der Anzahl 13 der Übergangsobjekte in Fig. 5 für alle in Fig. 5 identifizierten Objekte durchgeführt worden ist, hat die Anzahl 13 der Übergangsobjekte den aktuellen Wert 1. Aus der Spur 22 des Objekts 2 und aus der Spur 32 des Objekts 3 ist jeweils ersichtlich, dass es sich bei den Objekten 2 und 3 jeweils um Wiedereinsteiger handelt. In Fig. 5 haben damit sowohl das Objekt 2 als auch das Objekt 3 jeweils zwei Übergänge über die Grenze 10 zwischen dem ersten Teilbereich 8 und dem zweiten Teilbereich 9 vollzogen. Bei den Objekten 2 und 3 in Fig. 5 handelt es sich also jeweils um mehrfache Übergänge desselben Objekts, die jeweils erkannt werden. Mit den hier beschriebenen Vorschriften zur Bestimmung der Anzahl 13, werden derartige mehrfache Übergänge desselben Objekts zwischen dem ersten Teilbereich 8 und dem zweiten Teilbereich 9 berücksichtigt.

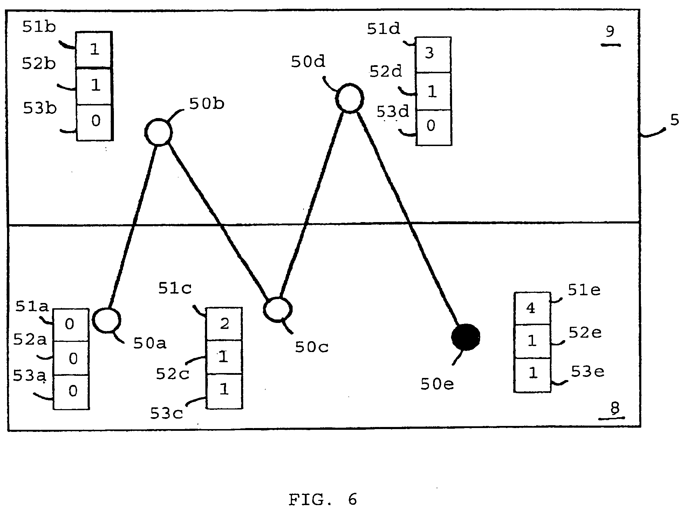

Fig. 6 zeigt eine Spur eines Objekts über eine Folge von fünf Bildern. Positionen 50a-50e des Objekts in den einzelnen Bildern, durch die die Spur festgelegt ist, sind jeweils als Kreise hervorgehoben. Wiederkehrende Merkmale sind wie zuvor mit identischen Bezugszeichen versehen. Bei dem hier beschriebenen Ausführungsbeispiel sind dem Objekt neben einem Gedächtniszustand, der in der Folge von Bildern durch Werte 51a-51e gegeben ist und der die Anzahl von Übergängen des Objekts zwischen dem ersten Teilbereich 8 und dem zweiten Teilbereich 9 wiedergibt, die das Objekt in dem jeweiligen Bild bereits vollzogen hat, zusätzlich eine Einsteigervariable und eine Aussteigervariable zugeordnet. Die Einsteigervariable nimmt in der Folge von Bildern jeweils Werte 52a-52e an. Die Werte 52a-52e der Einsteigervariable haben dabei den Wert 0, wenn das Objekt in dem jeweiligen Bild nicht als Einsteiger markiert ist, und den Wert 1, wenn das Objekt in dem jeweiligen Bild als Einsteiger markiert ist. Entsprechend nimmt die Aussteigervariable in der Folge von Bildern jeweils Werte 53a-53e an. Auch die Werte 53a-53e der Aussteigervariable haben den Wert 0, wenn das Objekt in dem jeweiligen Bild nicht als Aussteiger markiert ist, und den Wert 1, wenn das Objekt in dem jeweiligen Bild als Aussteiger markiert ist. Das Bestimmen der Anzahl der Übergangsobjekte wird in Bezug auf das hier gezeigte Ausführungsbeispiel wie zuvor beschrieben vorgenommen und daher nicht näher erläutert.

Im ersten der Folge von Bildern, in dem das Objekt erstmalig identifiziert wird und die Anfangsposition 50a im ersten Teilbereich 8 des beobachteten Bereichs 5 einnimmt, werden der Wert 51a des Gedächtniszustands, der Wert 52a der Einsteigervariable und der Wert 53a der Aussteigervariable jeweils mit dem Wert 0 initialisiert. Das Objekt, das die Grenze 10 im ersten Bild noch nicht überschritten hat, ist im ersten Bild also weder als Einsteiger noch als Aussteiger markiert. Eine hier nicht gesondert aufgeführte Einsteigerzahl, die gleich einer Anzahl der als Einsteiger markierten Objekte ist, ist daher im ersten Bild ebenfalls 0. Ebenso ist eine hier nicht gesondert aufgeführte Aussteigerzahl, die gleich einer Anzahl der als Aussteiger markierten Objekte ist, im ersten Bild 0. Da in der Folge von Bildern in Fig. 6 jeweils nur ein Objekt identifiziert und als Einsteiger und/oder als Aussteiger markiert wird, ist die Einsteigerzahl in der Folge von Bildern jeweils gleich dem jeweiligen Wert der Einsteigervariable und die Aussteigerzahl ist jeweils gleich dem jeweiligen Wert der Aussteigervariable. Auf die Aktualisierung der Einsteigerzahl und der Aussteigerzahl wird daher im Weiteren nicht näher eingegangen. Von Bild zu Bild bewegt sich das Objekt jeweils über die Grenze 10 zwischen dem ersten Teilbereich 8 und dem zweiten Teilbereich 9 hin und her. Auch die hier nicht gezeigte Anzahl der Übergangsobjekte ist im ersten Bild 0.

Im zweiten Bild liegt die zweite Position 50b des Objekts im zweiten Teilbereich 9. Der Wert 51b des Gedächtniszustands wird um 1 inkrementiert und hat nun den Wert 1. Da der Wert 51b des Gedächtniszustands im zweiten Bild gerade ist, ist der Gedächtniszustand des Objekts im zweiten Bild ein erster Gedächtniszustand. Nach der Aktualisierung des Gedächtniszustands werden die Werte 52b der Einsteigervariable und 53b der Aussteigervariable aktualisiert. Da die Anfangsposition des Objekts im ersten Teilbereich 8 liegt und das Objekt die Grenze 10 im zweiten Bild bereits einmal überschritten hat, wie dem Wert 51b des Gedächtniszustands entnehmbar ist, wird der Wert 52b der Einsteigervariable auf 1 gesetzt. Damit wird das Objekt als Einsteiger markiert. Da weder die Anfangsposition 50a im zweiten Teilbereich 9 liegt noch der Gedächtniszustand des Objekts ein zweiter Gedächtniszustand ist, ist der Wert 53b der Aussteigervariable im zweiten Bild weiterhin 0. Das Objekt ist im zweiten Bild also nicht als Aussteiger markiert. Die Anzahl der Übergangsobjekte ist im zweiten Bild 1 und damit gleich der Einsteigerzahl.

Im dritten Bild liegt die dritte Position 50c des Objekts wiederum im ersten Teilbereich 8. Zwischen dem zweiten und dem dritten Bild hat das Objekt also wiederum die Grenze 10 überschritten. Der Wert 51c des Gedächtniszustands wird daher um 1 inkrementiert und hat nun den Wert 2. Da der Wert 51c gerade ist, ist der Gedächtniszustand des Objekts im dritten Bild der zweite Gedächtniszustand. Nach der Aktualisierung des Gedächtniszustands erfolgt die Aktualisierung des Wertes 52c der Einsteigervariable und des Wertes 53c der Aussteigervariable. Da das Objekt die Grenze 10 im dritten Bild mindestens einmal, nämlich genau zweimal, überschritten hat und der Gedächtniszustand der zweite Gedächtniszustand ist, betragen der Wert 52c der Einsteigervariable und der Wert 53c der Aussteigervariable jeweils 1. Das Objekt ist im dritten Bild also sowohl als Einsteiger als auch als Aussteiger markiert. Da das Objekt im dritten Bild ein Wiedereinsteiger ist, ist die Anzahl der Übergangsobjekte im dritten Bild 0 und damit verschieden von der Einsteigerzahl, die 1 beträgt.

Die vierte Position 50d im vierten Bild liegt wiederum im zweiten Teilbereich 9. Das Objekt hat zwischen dem dritten und dem vierten Bild also wieder die Grenze 10 überschritten. Der Wert 51d des Gedächtniszustands wird um 1 auf 3 erhöht, so dass der Gedächtniszustand im vierten Bild der erste Gedächtniszustand ist. Der Wert 52d der Einsteigervariable ist im vierten Bild weiterhin 1 und der Wert 53d der Aussteigervariable wird im vierten Bild wieder auf 0 gesetzt. Im vierten Bild beträgt die Anzahl der Übergangsobjekte wieder 1 und ist damit gleich der Einsteigerzahl.

Die fünfte Position 50e im fünften Bild liegt im ersten Teilbereich 8. Das Objekt hat zwischen dem vierten und dem fünften Bild also wieder die Grenze 10 überschritten. Der Wert 51e des Gedächtniszustands wird um 1 auf 4 erhöht, so dass der Gedächtniszustand im fünften Bild der zweite Gedächtniszustand ist. Der Wert 52e der Einsteigervariable ist im fünften Bild weiterhin 1 und der Wert 53e der Aussteigervariable wird im fünften Bild wieder auf 1 gesetzt, da das Objekt die Grenze im fünften Bild mindestens einmal, nämlich genau viermal, überschritten hat und der Gedächtniszustand der zweite Gedächtniszustand ist. Im fünften Bild ist das Objekt wiederum ein Wiedereinsteiger. Die Anzahl der Übergangsobjekte ist damit wieder 0 und von der Einsteigerzahl verschieden, die weiter 1 beträgt.

## Patentansprüche

1. Verfahren zur Bestimmung einer Anzahl (13) von Übergangsobjekten (1;2;3;4), die sich aus einem ersten Teilbereich (8) eines beobachteten Bereichs (5) in einen zweiten Teilbereich (9) des beobachteten Bereichs (5) bewegen, wobei
- eine Folge von Bildern des beobachteten Bereichs (5) aufgenommen wird, in denen jeweils Objekte (1;2;3;4) identifiziert und Positionen (1b,1c;2a,2b,2c;3a,3b,3c;4a,4b) der Objekte (1;2;3;4) bestimmt werden,
- die Objekte (1;2;3;4) abhängig von ihren Positionen (1b,1c;2a,2b,2c;3a,3b,3c;4a,4b) jeweils entweder dem ersten Teilbereich (8) oder dem zweiten Teilbereich (9) zugeordnet werden,
- mehrfache Übergänge desselben Objekts (1;2;3;4) zwischen dem ersten Teilbereich (8) und dem zweiten Teilbereich (9) bei der Bestimmung der Anzahl (13) der Übergangsobjekte berücksichtigt werden, wobei jedem der Objekte (1;2;3;4) jeweils eine Spur (12;22;32;42) zugeordnet wird, die aus Positionen (1b,1c;2a,2b,2c;3a,3b,3c;4a,4b) des Objekts (1;2;3;4) in der Folge von Bildern bestimmt wird, wobei die Spur (12;22;32;42) jeweils eine Anfangsposition (1b;2a;3a;4a) hat, die entweder im ersten Teilbereich (8) oder im zweiten Teilbereich (9) liegt, und wobei jedem der Objekte (1;2;3;4) anhand seiner Spur (12;22;32;42) ein Gedächtniszustand (11;21;31;41) zugeordnet wird, der bei gegebener Anfangsposition (1b;2a;3a;4a) der Spur (12;22;32;42) abhängig davon ist, ob das jeweilige Objekt (1;2;3;4) dem ersten Teilbereich (8) oder dem zweiten Teilbereich (9) zugeordnet wird,
**dadurch gekennzeichnet,**
**dass** der Gedächtniszustand (11;21;31;41) eine Zahl ist, die bei einem Übergang des jeweiligen Objekts (1;2;3;4) zwischen dem ersten Teilbereich (8) und dem zweiten Teilbereich (9) jeweils um einen ersten Wert inkrementiert wird, wobei der Gedächtniszustand ein erster Gedächtniszustand ist, wenn die Zahl ein ungeradzahliges Vielfaches des ersten Wertes ist, und wobei der Gedächtniszustand ein zweiter Gedächtniszustand ist, wenn die Zahl ein geradzahliges Vielfaches des ersten Wertes ist.

2. Verfahren nach Anspruch 1, **dadurch gekennzeichnet, dass** das Identifizieren der Objekte (1;2;3;4) in den Bildern jeweils eine Segmentierung der Bilder umfasst.

3. Verfahren nach einem der vorhergehenden Ansprüche, **dadurch gekennzeichnet, dass** die Bestimmung der Anzahl (13) eine Aktualisierung der Anzahl (13) nach einem Übergang der Objekte (1;2;3;4) zwischen dem ersten Teilbereich (8) und dem zweiten Teilbereich (9) umfasst, wobei die Aktualisierung abhängig von dem Gedächtniszustand (11;21;31;41) des jeweiligen Objekts (1;2;3;4) und von einer Richtung des Übergangs des jeweiligen Objekts (1;2;3;4) vorgenommen wird.

4. Verfahren nach einem der vorhergehenden Ansprüche, **dadurch gekennzeichnet, dass** der Gedächtniszustand (11;21;31;41) ein erster Gedächtniszustand ist, wenn die Anfangsposition (1b;2a;3a;4a) der Spur (12;22;32;42) des jeweiligen Objekts (1;2;3;4) und die aktuelle Position des jeweiligen Objekts (1;2;3;4) jeweils in unterschiedlichen Teilbereichen (8;9) liegen, und dass der Gedächtniszustand (11;21;31;41) ein zweiter Gedächtniszustand ist, wenn die Anfangsposition (1b;2a;3a;4a) des jeweiligen Objekts (1;2;3;4) und die aktuelle Position des jeweiligen Objekts (1;2;3;4) in demselben Teilbereich (8;9) liegen.

5. Verfahren nach Anspruch 3, **dadurch gekennzeichnet, dass** das Aktualisieren umfasst, dass die Anzahl (13) der Übergangsobjekte (1;2;3;4) um einen zweiten Wert inkrementiert wird, wenn der Übergang des jeweiligen Objekts (1;2;3;4) vom ersten Teilbereich (8) in den zweiten Teilbereich (9) erfolgt und der Gedächtniszustand (11;21;31;41) des jeweiligen Objekts (1;2;3;4) der erste Gedächtniszustand ist, und dass die Anzahl (13) der Übergangsobjekte (1;2;3;4) um den zweiten Wert dekrementiert wird, wenn der Übergang des jeweiligen Objekts (1;2;3;4) vom zweiten Teilbereich (9) in den ersten Teilbereich (8) erfolgt und der Gedächtniszustand (11;21;31;41) des jeweiligen Objekts (1;2;3;4) der zweite Gedächtniszustand ist.

6. Verfahren nach einem der vorhergehenden Ansprüche, **dadurch gekennzeichnet, dass** ein Objekt, das mindestens einmal aus dem ersten Teilbereich (8) in den zweiten Teilbereich (9) oder das mindestens einmal aus dem zweiten Teilbereich (9) in den ersten Teilbereich (8) übergeht, als Einsteiger und/oder als Aussteiger markiert wird, wobei das Objekt
- als Einsteiger markiert wird, wenn seine Anfangsposition (50a) im ersten Teilbereich (8) liegt,
- als Aussteiger markiert wird, wenn seine Anfangsposition (50a) im zweiten Teilbereich (9) liegt sowie
- als Einsteiger und als Aussteiger markiert wird, wenn der Gedächtniszustand des Objekts der zweite Gedächtniszustand ist.

7. System zur Bestimmung einer Anzahl (13) von Übergangsobjekten (1;2;3;4), die sich aus einem ersten Teilbereich (8) eines beobachteten Bereichs (5) in einen zweiten Teilbereich (9) des beobachteten Bereichs (5) bewegen, umfassend mindestens eine Sensoranordnung (14) und eine mit der Sensoranordnung (14) verbundene Recheneinheit, wobei die Sensoranordnung (14) eingerichtet ist, eine Folge von Bildern des beobachteten Bereichs (5) aufzunehmen, und wobei die Recheneinheit programmtechnisch eingerichtet ist,
- in den Bildern jeweils Objekte (1;2;3;4) zu identifizieren und Positionen (1b,1c;2a,2b,2c;3a,3b,3c;4a,4b) der Objekte (1;2;3;4) zu bestimmen,
- die Objekte (1;2;3;4) abhängig von ihren Positionen (1b,1c;2a,2b,2c;3a,3b,3c;4a,4b) jeweils entweder dem ersten Teilbereich (8) oder dem zweiten Teilbereich (9) zuzuordnen,
- mehrfache Übergänge desselben Objekts (1;2;3;4) zwischen dem ersten Teilbereich (8) und dem zweiten Teilbereich (9) bei der Bestimmung der Anzahl (13) der Übergangsobjekte (1;2;3;4) zu berücksichtigen,
- jedem der Objekte (1;2;3;4) jeweils eine Spur (12;22;32;42) zuzuordnen, die aus Positionen (1b,1c;2a,2b,2c;3a,3b,3c;4a,4b) des Objekts (1;2;3;4) in der Folge von Bildern bestimmt wird, wobei die Spur (12;22;32;42) jeweils eine Anfangsposition (1b;2a;3a;4a) hat, die entweder im ersten Teilbereich (8) oder im zweiten Teilbereich (9) liegt, und
- jedem der Objekte (1;2;3;4) anhand seiner Spur (12;22;32;42) einen Gedächtniszustand (11;21;31;41) zuzuordnen, der bei gegebener Anfangsposition (1b;2a;3a;4a) der Spur (12;22;32;42) abhängig davon ist, ob das jeweilige Objekt (1;2;3;4) dem ersten Teilbereich (8) oder dem zweiten Teilbereich (9) zugeordnet wird,
**dadurch gekennzeichnet,**
**dass** die Recheneinheit eingerichtet ist, den Gedächtniszustand (11;21;31;41) als Zahl zuzuordnen und die Zahl bei einem Übergang des jeweiligen Objekts (1;2;3;4) zwischen dem ersten Teilbereich (8) und dem zweiten Teilbereich (9) jeweils um einen ersten Wert zu inkrementieren, wobei die Recheneinheit den Gedächtniszustand gleich einem ersten Gedächtniszustand setzt, wenn die Zahl ein ungeradzahliges Vielfaches des ersten Wertes ist, und wobei die Recheneinheit den Gedächtniszustand gleich einem zweiten Gedächtniszustand zu setzt, wenn die Zahl ein geradzahliges Vielfaches des ersten Wertes ist.

8. System nach Anspruch 7, **dadurch gekennzeichnet, dass** die Sensoranordnung (14) einen optischen Sensor umfasst, der vorzugsweise als Fotokamera, als CCD-Kamera, als Stereokamera, als Videokamera, als Streak-Kamera oder als time-of-flight-Kamera ausgebildet ist.

## Claims

1. A method for determining a number (13) of transfer objects which move from a first sub-region (8) of an observed region (5) into a second sub-region (9) of the observed region (5), wherein
a sequence of images of the observed region (5) is recorded, in which objects (1;2;3;4) are identified and positions (1b,1c;2a,2b,2c;3a,3b,3c;4a,4b) of the objects (1;2;3;4) are determined,
the objects (1;2;3;4) are each associated, in accordance with their positions (1b,1c;2a,2b,2c;3a,3b,3c;4a,4b), either to the first sub-region (8) or the second sub-region (9), and
multiple transfers of the same object (1;2;3;4) between the first sub-region (8) and the second sub-region (9) are taken into account when determining the number (13) of transfer objects,
wherein a track is assigned to each of the objects (1;2;3;4), the track being determined from positions (1b,1c;2a,2b,2c;3a,3b,3c;4a,4b) of the object (1;2;3;4) in the sequence of images, wherein the track has a starting position (1b;2a;3a;4a) located either in the first sub-region (8) or in the second sub-region (9), and wherein a memory state (11;21;31;41) is assigned to each of the objects (1;2;3;4) on the basis of the track assigned to the object (1;2;3;4), wherein, given the starting position of the track, the memory state (11;21;31;41) is dependent on whether the object (1;2;3;4) is associated with the first sub-region (8) or with the second sub-region (9),
**characterised in that**
the memory state (11;21;31;41) is a count that, when the object (1;2;3;4) transfers between the first sub-region (8) and the second sub-region (9), is incremented by a first value, wherein a first memory state is present if the count is an odd multiple of the first value, and wherein a second memory state is present if the count is an even multiple of the first value.

2. The method according to claim 1, **characterised in that** the identification of the objects (1;2;3;4) in the images in each case comprises a segmentation of the images.

3. The method according to one of the preceding claims, **characterised in that** the determination of the number (13) comprises an update of the number (13) once the objects (1;2;3;4) have transferred between the first sub-region (8) and the second sub-region (9), wherein the update is performed in accordance with the memory state (11;21;31;41) of the object (1;2;3;4) and in accordance with a direction of the transfer of the object (1;2;3;4).

4. The method according to one of the preceding claims, **characterised in that** the memory state (11;21;31;41) is a first memory state when the starting position (1b;2a;3a;4a) of the track (12;22;32;42) of the respective object and the current position of the respective object are each located in different sub-regions, and **in that** the memory state (11;21;31;41) is a second memory state when the starting position of the respective object and the current position of the respective object are located in the same sub-region.

5. The method according to claim 3, **characterised in that** the updating process comprises the fact that the number (13) of transfer objects is incremented by a second value when the respective object transfers from the first sub-region (8) into the second sub-region (9) and the memory state (11;21;31;41) of the respective object is the first memory state, and **in that** the number (13) of transfer objects is decremented by the second value when the respective object transfers from the second sub-region (9) into the first sub-region (8) and the memory state (11;21;31;41) of the respective object is the second memory state.

6. The method according to one of the preceding claims, **characterised in that** an object which passes at least once from the first sub-region (8) into the second sub-region (9) or which passes at least once from the second sub-region (9) into the first sub-region (8) is marked as an entrant and/or as a leaver, wherein the object
is marked as an entrant if its starting position (50a) is located in the first sub-region (8),
is marked as a leaver if its starting position (50a) is located in the second sub-region (9), and
is marked as an entrant and as a leaver if the memory state (11;21;31;41) of the object is the second memory state.

7. A system for determining a number (13) of transfer objects which move from a fist sub-region (8) of an observed region (5) into a second sub-region (9) of the observed region (5), said system comprising at least one sensor arrangement (14) and a computation unit connected to the sensor arrangement (14), wherein the sensor arrangement (14) is designed to record a sequence of images of the observed region (5), and wherein the computation unit is programmed
to identify objects (1;2;3;4) in the images and to determine positions (1b,1c;2a,2b,2c;3a,3b,3c;4a,4b) of the objects (1;2;3;4),
to associate the objects (1;2;3;4), in accordance with their positions (1b,1c;2a,2b,2c;3a,3b,3c;4a,4b), either with the first sub-region (8) or with the second sub-region (9),
to take into account multiple transfers of the same object (1;2;3;4) between the first sub-region (8) and the second sub-region (9) when determining the number (13) of transfer objects,
to assign a track to each of the objects (1;2;3;4), the track being determined from positions (1b,1c;2a,2b,2c;3a,3b,3c;4a,4b) of the object (1;2;3;4) in the sequence of images, wherein each track has a starting position (1b;2a;3a;4a) located either in the first sub-region (8) or in the second sub-region (9), and
to assign a memory state (11;21;31;41) to each of the objects (1;2;3;4) on the basis of the track assigned to the object (1;2;3;4), wherein, given the starting position of the track, the memory state (11;21;31;41) is dependent on whether the object (1;2;3;4) is associated with the first sub-region (8) or with the second sub-region (9),
**characterised in that**
the computation unit is configured to assign the memory state (11;21;31;41) as a count and to increment the count by a first value when the object (1;2;3;4) transfers between the first sub-region (8) and the second sub-region (9), wherein, if the count is an odd multiple of the first value, the computation unit sets the memory state to a first memory state, and wherein, if the count is an even multiple of the first value, the computation unit sets the memory state to a second memory state.

8. The system according to claim 7, **characterised in that** the sensor arrangement (14) comprises an optical sensor which is preferably formed as a photo camera, as a CCD camera, as a stereo camera, as a video camera, as a streak camera or as a time-of flight camera.

## Revendications

1. Procédé de détermination d'un nombre (13) d'objets de transition (1 ; 2 ; 3 ; 4) qui se déplacent d'une première zone partielle (8) d'une zone observée (5) vers une deuxième zone partielle (9) de la zone observée (5),
- une suite d'images de la zone observée (5) étant enregistrées, dans lesquelles des objets (1 ; 2 ; 3 ; 4) sont identifiés et les positions (1b, 1c ; 2a, 2b, 2c ; 3a, 3b, 3c ; 4a, 4b) des objets (1 ; 2 ; 3 ; 4) sont déterminées,
- les objets (1 ; 2 ; 3 ; 4) sont assignés, en fonction de leurs positions (1b, 1c ; 2a, 2b, 2c ; 3a, 3b, 3c ; 4a, 4b), soit à la première zone partielle (8) soit à la deuxième zone partielle (9),
- plusieurs transitions du même objet (1 ; 2 ; 3 ; 4) entre la première zone partielle (8) et la deuxième zone partielle (9) étant prises en compte lors de la détermination du nombre (13) des objets de transition, une trace (12 ; 22 ; 32 ; 42), qui est déterminée à partir des positions (1b, 1c ; 2a, 2b, 2c; 3a, 3b, 3c; 4a, 4b) de l'objet (1; 2; 3; 4) dans la suite d'images, étant assignée à chacun des objets (1 ; 2 ; 3 ; 4), la trace (12; 22; 32; 42) comprenant une position initiale (1b ; 2a ; 3a ; 4a), qui se trouve soit dans la première zone partielle (8) soit dans la deuxième zone partielle (9) et un état de mémoire (11 ; 21 ; 31 ; 41) étant assigné à chacun des objets (1 ; 2 ; 3 ; 4) à l'aide de sa trace (12 ; 22 ; 32 ; 42), qui, pour une position initiale (1b ; 2a ; 3a ; 4a) donnée de la trace (12 ; 22 ; 32 ; 42), dépend du fait que l'objet (1 ; 2 ; 3 ; 4) correspondant est assigné à la première zone partielle (8) ou à la deuxième zone partielle (9),
**caractérisé en ce que**
l'état de mémoire (11 ; 21 ; 31 ; 41) est un nombre qui est incrémenté lors d'une transition de l'objet (1 ; 2 ; 3 ; 4) correspondant entre la première zone partielle (8) et la deuxième zone partielle (9) d'une première valeur, l'état de mémoire étant un premier état de mémoire lorsque le nombre est un multiple impair de la première valeur et l'état de mémoire étant un deuxième état de mémoire lorsque le nombre est un multiple pair de la première valeur.

2. Procédé selon la revendication 1, **caractérisé en ce que** l'identification des objets (1 ; 2 ; 3 ; 4) dans les images comprend une segmentation des images.

3. Procédé selon l'une des revendications précédentes, **caractérisé en ce que** la détermination du nombre (13) comprend une actualisation du nombre (13) après une transition des objets (1 ; 2 ; 3 ; 4) entre la première zone partielle (8) et la deuxième zone partielle (9), l'actualisation étant effectuée en fonction de l'état de mémoire (11 ; 21 ; 31; 41) de l'objet (1 ; 2 ; 3 ; 4) correspondant et d'une direction de la transition de l'objet (1 ; 2 ; 3 ; 4) correspondant.

4. Procédé selon l'une des revendications précédentes, **caractérisé en ce que** l'état de mémoire (11 ; 21 ; 31 ; 41) est un premier état de mémoire lorsque la position initiale (1 ; 2a ; 3a ; 4a) de la trace (12 ; 22 ; 32 ; 42) de l'objet (1 ; 2 ; 3 ; 4) correspondant et la position actuelle de l'objet (1 ; 2 ; 3 ; 4) correspondant se trouvent dans des zones partielles (8 ; 9) différentes et **en ce que** l'état de mémoire (11; 21; 31; 41) est un deuxième état de mémoire lorsque la position initiale (1b ; 2a ; 3a ; 4a) de l'objet (1 ; 2 ; 3 ; 4) correspondant et la position actuelle de l'objet (1 ; 2 ; 3 ; 4) correspondant se trouvent dans la même zone partielle (8 ; 9).

5. Procédé selon la revendication 3, **caractérisé en ce que** l'actualisation comprend le fait que le nombre (13) des objets en transition (1 ; 2 ; 3 ; 4) est incrémenté d'une deuxième valeur lorsque la transition de l'objet (1 ; 2 ; 3 ; 4) correspondant a lieu de la première zone partielle (8) vers la deuxième zone partielle (9) et l'état de mémoire (11 ; 21 ; 31 ; 41) de l'objet (1 ; 2 ; 3 ; 4) correspondant est le premier état de mémoire et **en ce que** le nombre (13) des objets en transition (1 ; 2 ; 3 ; 4) est décrémenté de la deuxième valeur lorsque la transition de l'objet (1 ; 2 ; 3 ; 4) correspondant a lieu de la deuxième zone partielle (9) vers la première zone partielle (8) et l'état de mémoire (11 ; 21 ; 31 ; 41) de l'objet (1 ; 2 ; 3 ; 4) correspondant est le deuxième état de mémoire.

6. Procédé selon l'une des revendications précédentes, **caractérisé en ce qu'**un objet, qui passe au moins une fois de la première zone partielle (8) à la deuxième zone partielle (9) ou qui passe au moins une fois de la deuxième zone partielle (9) à la première zone partielle (8), est marqué comme montant et/ou descendant, l'objet
- étant marqué comme montant lorsque sa position initiale (50a) se trouve dans la première zone partielle (8),
- étant marqué comme descendant lorsque sa position initiale (50a) se trouve dans la deuxième zone partielle (9) et
- étant marqué comme montant et comme descendant lorsque l'état de mémoire de l'objet est le deuxième état de mémoire.

7. Système de détermination d'un nombre (13) d'objets en transition (1 ; 2 ; 3 ; 4), qui se déplacent d'une première zone partielle (8) d'une zone observée (5) vers une deuxième zone partielle (9) de la zone observée (5), comprenant au moins un dispositif à capteurs (14) et une unité de calcul reliée au dispositif capteurs (14), le dispositif à capteurs (14) étant conçu pour enregistrer une suite d'images de la zone observée (5) et l'unité de calcul étant conçu, d'un point de vue de la programmation :
- pour identifier dans les images des objets (1 ; 2 ; 3 ; 4) et des positions (1b, 1c ; 2a, 2b, 2c ; 3a, 3b, 3c ; 4a, 4b) des objets (1 ; 2 ; 3 ; 4),
- pour assigner les objets (1 ; 2 ; 3 ; 4), en fonction de leurs positions (1b, 1c ; 2a, 2b, 2c ; 3a, 3b, 3c ; 4a, 4b), soit à la première zone partielle (8) soit à la deuxième zone partielle (9),
- pour prendre en compte plusieurs transitions du même objet (1 ; 2 ; 3 ; 4) entre la première zone partielle (8) et la deuxième zone partielle (9) lors de la détermination du nombre (13) d'objets en transition (1 ; 2 ; 3 ; 4),
- pour assigner, à chacun des objets (1 ; 2 ; 3 ; 4), une trace (12 ; 22 ; 32 ; 42), qui est déterminée à partir des positions (1b, 1c ; 2a, 2b, 2c ; 3a, 3b, 3c ; 4a, 4b) de l'objet (1 ; 2 ; 3 ; 4) dans la suite d'images, la trace (12 ; 22 ; 32 ; 42) ayant une position initiale (1b ; 2a ; 3a ; 4a) qui se trouve soit dans la première zone partielle (8) soit dans la deuxième zone partielle (9) et
- pour assigner, à chacun des objets (1 ; 2 ; 3 ; 4), à l'aide d'une trace (12 ; 22 ; 32 ; 42), un état de mémoire (11 ; 21 ; 31 ; 41), qui, pour une position initiale (1b ; 2a ; 3a ; 4a) donnée de la trace (12 ; 22 ; 32 ; 42), dépend du fait que l'objet (1 ; 2 ; 3 ; 4) correspondant est assigné à la première zone partielle (8) ou à la deuxième zone partielle (9),
**caractérisé en ce que**
l'unité de calcul est conçue pour assigner l'état de mémoire (11 ; 21 ; 31 ; 41) en tant que nombre et pour incrémenter le nombre lors d'une transition de l'objet (1; 2; 3; 4) correspondant entre la première zone partielle (8) et la deuxième zone partielle (9) d'une première valeur, l'unité de calcul ajustant l'état de mémoire identique à un premier état de mémoire lorsque le nombre est un multiple impair de la première valeur et l'unité de calcul ajustant l'état de mémoire identique à un deuxième état de mémoire lorsque le nombre est un multiple pair de la première valeur.

8. Système selon la revendication 7, **caractérisé en ce que** le dispositif à capteurs (14) comprend un capteur optique qui est conçu de préférence comme un appareil photographique, une caméra CCD, une caméra stéréo, une caméra à balayage ou une caméra « time-of-flight ».
